# EUROPÄISCHE PATENTSCHRIFT

(11) **EP 0 587 613 B1**
(45) Veröffentlichungstag und Bekanntmachung des Hinweises auf die Patenterteilung: **28.02.1996**
(21) Anmeldenummer: 92910709.2
(22) Anmeldetag: 28.05.1992
(51) Int. Cl.: B29C 44/00, E04F 13/08

(54) **VERFAHREN UND EINRICHTUNG ZUR HERSTELLUNG EINES VORGEFERTIGTEN, ISOLIERENDEN WANDELEMENTS**
PROCESS AND ARRANGEMENT FOR MANUFACTURING A PREFABRICATED INSULATING WALL ELEMENT
PROCEDE ET INSTALLATION POUR LA FABRICATION D'UN ELEMENT PREFABRIQUE DE PAROI ISOLANTE

(30) Priorität: 31.05.1991 DE 4117820
(43) Veröffentlichungstag der Anmeldung: 23.03.1994
(73) Patentinhaber: PISCHEL, Dieter A., D-38170 Schöppenstedt (DE)
(72) Erfinder: PISCHEL, Dieter A., D-38170 Schöppenstedt (DE)
(74) Vertreter: Meyer, Ludgerus A., Dipl.-Ing.
(86) Internationale Anmeldenummer: DE9200434
(87) Internationale Veröffentlichungsnummer: WO9221512

(56) Entgegenhaltungen:
- EP-A- 0 345 244
- EP-A- 0 401 051
- DE-A- 1 804 248
- DE-A- 2 514 273
- DE-A- 3 045 836
- DE-C- 170 018
- DE-C- 294 020
- DE-U- 8 201 949
- US-A- 3 426 490
- US-A- 3 602 476
- US-A- 5 061 161

## Beschreibung

Die Erfindung betrifft ein Verfahren zur Herstellung eines vorgefertigten, isolierenden, winkelförmigen Wandelements nach dem Oberbegriff des Anspruchs 1, eine Vorrichtung zur Durchführung eines derartigen Verfahrens nach dem Oberbegriff des Anspruchs 7 sowie ein isolierendes, winkelförmiges Wandelement nach Anspruch 12.

Zur Isolierung von Gebäuden ist es bekannt, auf die Wandaußenseite vorgefertigte Verblendtafeln aufzutragen, die als Verbundtafeln aus einem Polyurethan-Hartschaum und Ziegelriemchen ausgebildet sind. Die einzelnen Riemchen sind gegeneinander durch Mörtelfugen abgetrennt. Auf diese Weise kann eine Gebäudewand nachträglich vollständig isoliert werden, wobei die Gebäudewand das Aussehen einer gemauerten Wand aufweist.

Derartige Verblendtafeln sind aus dem DE-GM 82 01 949.5 bekannt. Zur Herstellung dieser Elemente werden Riemchen im Abstand zueinander in einer Form angeordnet und die gebildeten Fugen mit einer Mischung aus Sand gefüllt. Anschließend wird die Form mit Polyurethan-Schaum ausgeschäumt, wobei durch das Verteilen des Schaums dieser auch in die Fugen zwischen die Riemchen eindringt und bei Aushärtung die Fugen verfestigt.

Obgleich das Verfahren für flächige Wandbereiche vorteilhaft einzusetzen ist, ergeben sich Probleme an Gebäudekanten, Fenster- und Türöffnungen. d.h. an allen Gebäudebereichen, an denen Randbereiche im Winkel zueinander stehen. In diesen Bereichen ist es daher normalerweise erforderlich, die aneinanderstoßenden Wandelemente mit Gehrungskanten zu versehen und miteinander zu verkleben. Wenn derartige Eckverbindungen nicht mit engen Toleranzen ausgebildet sind, ergeben sich Ansätze, die sowohl das optische Erscheinungsbild stören als auch schadensanfällig sind.

Der Erfindung liegt daher die Aufgabe zugrunde, ein Verfahren zur Herstellung eines vorgefertigten, isolierenden, winkelförmigen Wandelements anzugeben, durch das ein nachträgliches Verkleben plattenförmiger Wandelemente vermieden, die Herstellungszeit des winkelförmigen Wandelements sehr klein gehalten werden kann und zusätzlich die Aufbauzeit zur Isolierung eines Gebäudes wesentlich verkürzt ist. Der Erfindung liegt weiterhin die Aufgabe zugrunde, eine Einrichtung zur Durchführung eines derartigen Verfahrens sowie ein nach diesem Verfahren hergestelltes Wandelement anzugeben.

Diese Aufgabe wird durch die in den Ansprüchen 1, 7 und 12 angegebenen Erfindung gelöst. Vorteilhafte Weiterbildungen der Erfindung sind in Unteransprüchen angegeben.

Nach dem erfindungsgemäßen Verfahren werden an sich bekannte winkelförmige, einstückig ausgebildete Riemchen nebeneinander mit Abstand in eine liegende Form mit im wesentlichen V-förmigem Querschnitt eingelegt. Die Zwischenräume zwischen den Riemchen werden mit einer Mischung aus Sand und Isocyanat ausgefüllt. Zwischen die Rückflächen von Riemchen und der Sand/Isocyanat-Mischung und einer Gegenform wird Polyurethan-Schaum eingebracht, wobei ein Teil des Polyurethans in die Sand/Isocyanat-Mischung eindringt, bevor das eingeführte Polyurethan endgültig aushärtet.

Eine erfindungsgemäße Einrichtung zur Durchführung des Verfahrens weist zwei mit ziegelsteinförmigen Ausnehmungen zur
Aufnahme von winkelförmigen Riemchen zur Bildung einer wannenförmigen Form zusammensetzbare Formteile auf, auf die eine Gegenform unter Bildung eines Abstandes aufsetzbar ist.

Bevorzugte Weiterbildungen dieser Einrichtung sind in den Unteransprüchen 8 - 11 angegeben.

Schließlich besteht ein nach dem erfindungsgemäßen Verfahren mit der erfindungsgemäßen Einrichtung herstellbares Wandelement gemäß Anspruch 12 aus einer winkelförmigen Hartschaumplatte mit damit verbundenen winkelförmigen Ziegelriemchen, die beim Herstellen des Wandelements durch eine Sand/Isocyanat-Mischung voneinander getrennt sind, in die Polyurethanschaum eingedrungen ist.

Weiterbildungen des Wandelements sind in den Unteransprüchen 13 und 14 angegeben.

Die Erfindung ermöglicht die Erstellung eines winkelförmigen Wandelements, das insbesondere als Eckteil von zu isolierenden Gebäuden einsetzbar ist. Es läßt sich ohne weiteres im Verbund mit ebenen auf ähnliche Weise hergestellten Platten einsetzen. Die Erfindung weist den Vorteil auf, daß derartige Wandelemente bereits vorgefertigt zur Baustelle gebracht werden können, ohne daß dort eine Vor-Ort-Verklebung von flächenförmigen Wandelementen erforderlich ist. Es ist ebenfalls keine Gehrungsverbindung zweier flächenförmiger Elemente erforderlich, die einen hohen Aufwand an der Baustelle erfordern würde.

Die Erfindung wird nachstehend anhand eines Ausführungsbeispiels näher erläutert. Es zeigen.
Fig. 1 eine aufgeklappte Ansicht einer Form zur Herstellung von eckförmigen Wandelementen,
Fig. 2 eine entsprechende Form in geschlossener Ansicht,
Fig. 3 eine Aufsicht auf das Formunterteil.

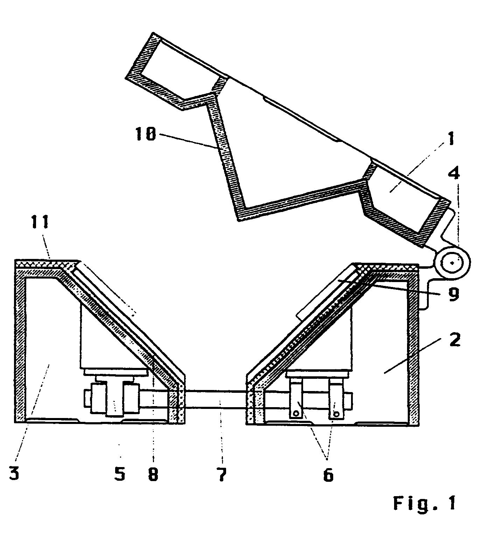

Die in Fig. 1 dargestellte Form weist Zwei untere Formteile 2 und 3 auf, die an ihrer Unterseite Lagerböcke 5 und 6 enthalten, die untereinander durch eine Schiebestange 7 verbunden sind. Die Formteile 2 und 3 können daher über die Schiebestange 7 zusammengeführt oder getrennt werden. An einem der Formteile ist über ein Gelenk 4 ein Deckel 1 angelenkt, der eine Gegenform 10 aufweist.

Das erfindungsgemäße Verfahren wird wie folgt durchgeführt:
Zunächst werden winkelförmige Riemchen, z.B. 11 Stück nebeneinanderliegend mit wechselnder Orientierung in die Formteile 2 und 3 eingelegt. Diese weisen auf ihrer Formoberfläche leicht erhobene Stege 12 und Erhöhungen 9 auf. Die Stege 12 bilden die Fugenbereiche des späteren Wandelements. Die Erhöhungen 9 bilden im späteren Wandelement Ausnehmungen, in die weitere Riemchen zur Verbindung des hergestellten Wandelements mit danebenliegenden Wandelementen eingesetzt werden können. Nachdem die Riemchen in die Formteile 2 und 3 eingelegt sind, werden diese über die Schiebestangen 7 gegeneinander verschoben. Dies kann von Hand geschehen, die Betätigung kann jedoch auch hydropneumatisch oder durch einen Schneckentrieb erfolgen. Wenn eine einfache Schiebestange verwendet ist, erfolgt das Verschließen der Formteile 2 und 3 vorzugsweise über stirnseitig an der Form angebrachte Kniehebelvorrichtungen.

Erfindungsgemäß ist vorgesehen, daß zwischen die Riemchen eine Sand/Isocyanat-Mischung zur Bildung der Fugenbereiche eingebracht wird. Diese Mischung wird vorzugsweise aus 30 -80 Teilen gewaschenem Sand mit einer Körnung G2 oder G3 und einem Liter Isocyanat erstellt, bis die Mischung eine pastenförmige Konsistenz hat. Die Mischung wird nun in die Zwischenräume zwischen die Riemchen eingearbeitet, insbesondere mit einem Spachtel, so daß sich eine im wesentlichen glatte Oberfläche, bestehend aus Riemchenrückseite, Erhöhungen 9 und Sand/Isocyanat-Mischung ergibt. Isocyanat hat die Eigenschaft, Restfeuchte im Sand zu binden und damit die Mischung zu stabilisieren. Gleichzeitig dient das eingebrachte Isocyanat als Härter für Polyurethan, das anschließend auf die so gebildete Rückseite aufgetragen wird. Wenn der Sand nicht erfindungsgemäß mit Isocyanat angemischt würde, würde aufgrund der winkelförmigen Anordnung der Sand nicht in den Fugenbereichen verbleiben, sondern herausrieseln.

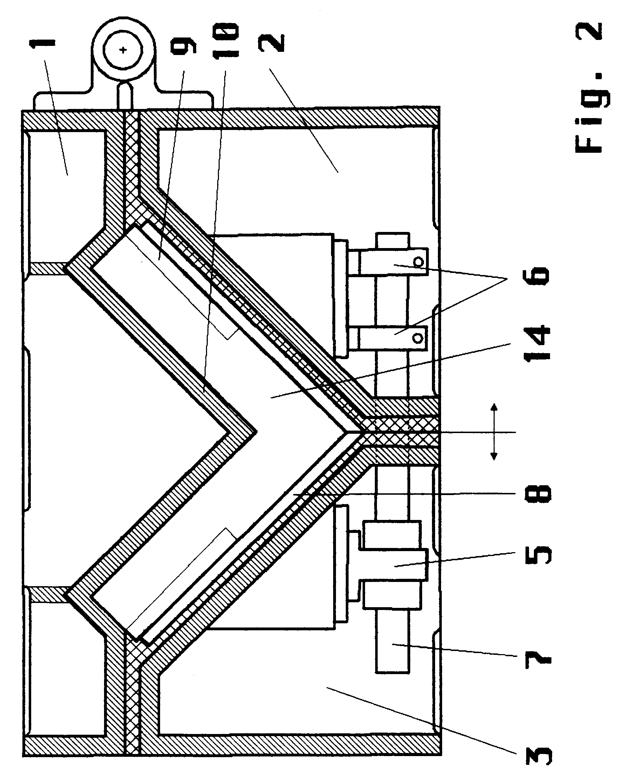

Nachdem die Sand/Isocyanat-Mischung in die Form eingebracht ist, wird eine Papierlage auf die Gegenform 10 aufgespannt. Dann wird der Deckel 1 heruntergeklappt und mit den unteren Formteilen, vorzugsweise über Kniehebelverbindungen, festgelegt. Fig. 2 zeigt eine entsprechend geschlossene Form. Nun kann von der Seite, beispielsweise durch ein stirnseitiges Loch, Zweikomponenten-Polyurethan in den Zwischenraum 14 eingebracht werden. Dieses Material schäumt unmittelbar auf und füllt damit den gesamten Raum zwischen Riemchen, Sand/Isocyanat-Mischung und Erhöhungen 9 sowie der Gegenform 10 aus. Während der Startzeit des Polyurethanschaums dringt ein Teil dieses Materials in die Sand/Isocyanat-Mischung bis zu einer gewünschten Tiefe ein, die von verschiedenen Faktoren abhängig ist. Das einzubringende Polyurethan ist dazu so einzustellen, daß nach der endgültigen Aushärung des Polyurethanschaums kein Durchschlag durch die Sand/Isocyanat-Mischung aufgetreten ist. Eine bevorzugte Polyurethanmischung besteht aus 100 - 130 Teilen Polyol und 100 Teilen Isocyanat.

Vorzugsweise werden die in die Form eingelegten Ziegelriemchen vorgeheizt, insbesondere auf eine Temperatur von 40 - 50°C. Dadurch verbessert sich das Schäumungsverhalten des Polyurethans und es kann die Eindringtiefe des Polyurethans in die Sand/Isocyanat-Mischung besser gesteuert werden. Sofern eine Aufheizung der gesamten Form auf 70 - 80° erfolgt, beispielsweise durch Heizschlangen in den unteren Formteilen 2 und 3 oder elektrische Heizspiralen, kann die Menge an FCKW-Treibstoffen in dem einzubringenden Polyurethanschaum erheblich reduziert werden.

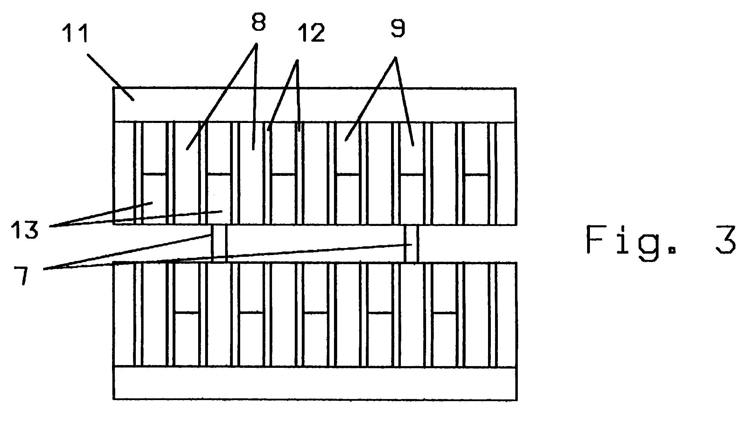

Fig. 3 zeigt eine Aufsicht auf die unteren Formteile 2 und 3. Es ist deutlich dargestellt, daß die Ausnehmungen 8 und 13 der Aufnahme von wechselseitig orientierten Riemchen dienen. Die Stege 12 dienen in erster Linie zur Festlegung der Fugenbereiche. In diese Bereiche wird die Sand/Isocyanat-Mischung eingebracht. Die Erhöhungen 9 müssen eine derartige Höhe aufweisen, daß sie bei in die Form eingelegten Riemchen mit deren Rückseite eine annähernde Ebene bilden. Damit der einzubringende Polyurethanschaum nicht an den Erhöhungen 9 haftet, werden diese zuvor mit einem Trennmittel, insbesondere auf Wachsbasis, versehen. Zum Schutz der Form, die insbesondere aus Aluguß hergestellt ist, ist die gesamte innere Formenoberfläche mit einer mehrere Millimeter dicken Epoxhydharzbeschichtung versehen.

Nachdem ein Wandelement in der Form fertiggestellt ist, wird der Deckel 1 vom Unterteil abgehoben, und das fertige Wandelement kann beispielsweise mittels Saughebern aus der Form entnommen werden, nachdem die Formteile 2 und 3 wieder auseinandergefahren sind. Die Reinigung der Form erfolgt vorzugsweise mit Druckluftausblasung.

Es wurde ermittelt, daß mit einer Polyurethanschaumdicke von 42 mm ein Wärmedurchgangskoeffizient von unter 0,02 erreicht werden konnte.

Die erfindungsgemäße Einrichtung kann vorzugsweise manuell betätigt werden, aber auch automatisch über Fließband, an einem Rundtisch oder an einer anderen automatischen Anlage.

Ein fertig hergestelltes Wandelement ist in sich stabil und kann ohne weiteres mit flachen Wandelementen kombiniert werden, indem in die durch die Erhöhungen 9 im Eckelement gebildeten Vertiefungen einzelne Riemchen eingesetzt werden, die mit den danebenliegenden Platten einen Verbund bilden.

Auf der Rückseite eines hergestellten Wandelements sollte eine Papierschicht vorhanden sein, durch die die Handhabung verbessert wird und die Austrittsmöglichkeit von Resttreibmitteln aus der Polyurethanschaumschicht verringert wird.

### Bezugszeichenliste

- 1: Deckel
- 2: Formteil
- 3: Formteil
- 4: Gelenk
- 5: Lagerbock
- 6: Lagerbock
- 7: Schiebestange
- 8: Ausnehmung
- 9: Erhöhung
- 10: Gegenform
- 11: Oberfläche
- 12: Steg
- 13: Ausnehmung
- 14: Formenraum

## Patentansprüche

1. Verfahren zur Herstellung eines winkelförmigen Wandelements, bestehend aus einer winkelförmigen Hartschaumplatte mit damit verbundenen durch eine mörtelartige Masse voneinander getrennten einstückig ausgebildeten eckförmigen Ziegelriemchen, dadurch gekennzeichnet, daß die Riemchen nebeneinander mit Abstand in eine liegende Form (2, 3) mit im wesentlichen V-förmigen Querschnitt eingelegt werden, daß die Zwischenräume zwischen den Riemchen mit einer Mischung aus Sand und Isocyanat ausgefüllt werden und daß in den Raum zwischen den Rückflächen von Riemchen und Sand/Isocyanat-Mischung und einer Gegenform (10) Polyurethanschaum eingebracht wird, wobei ein Teil des Polyurethanschaums die Sand/Isocyanat-Mischung teilweise durchdringt, und daß die nicht mit Polyurethanschaum durchdrungenen Mischungsbereiche nach Aushärtung des Polyurethanschaums aus den Zwischenräumen zwischen den Riemchen entfernt werden.

2. Verfahren nach Anspruch 1, dadurch gekennzeichnet, daß die Zwischenräume zwischen den Riemchen mit einer Mischung aus 30 - 80 Volumenteilen Sand und einem Volumenteil Isocyanat ausgefüllt werden.

3. Verfahren nach Anspruch 1, dadurch gekennzeichnet, daß die mit Vertiefungen (8, 13) zur Aufnahme von Riemchen versehene Form außerhalb der mit Riemchen bzw. der Sand/Isocyanat-Mischung ausgefüllten Zwischenräume vor der Einbringung des Polyurethanschaums mit einem Trennmittel beschichtet wird.

4. Verfahren nach Anspruch 1, dadurch gekennzeichnet, daß die Gegenform (10) vor der Einbringung des Polyurethanschaums mit einer Papierlage bedeckt wird.

5. Verfahren nach Anspruch 1, dadurch gekennzeichnet, daß die Form und die verwendeten Materialien vor der Verarbeitung auf eine erhöhte Temperatur gebracht werden.

6. Verfahren nach Anspruch 5, dadurch gekennzeichnet, daß die erhöhte Temperatur 20 - 100°C beträgt.

7. Vorrichtung zur Herstellung eines winkelförmigen Wandelements, bestehend aus einer winkelförmigen Hartschaumplatte mit damit verbundenen durch eine mörtelartige Masse voneinander getrennten einstückig ausgebildeten eckförmigen Ziegelriemchen, insbesondere zur Durchführung eines Verfahrens nach Anspruch 1, dadurch gekennzeichnet, daß zwei mit Ausnehmungen (8, 13) zur Aufnahme von winkelförmigen Riemchen im rechten Winkel zur Bildung einer wannenförmigen Form zusammensetzbare Formteile (2, 3) vorgesehen sind, und daß eine Gegenform (10) unter Bildung eines Abstandes auf die beiden Formteile (2, 3) aufsetzbar ist.

8. Einrichtung nach Anspruch 7, dadurch gekennzeichnet, daß die aus Aluguß bestehende Form eine innere Polyamidbeschichtung aufweist.

9. Einrichtung nach Anspruch 7, dadurch gekennzeichnet, daß die im rechten Winkel angeordneten Formteile (2, 3) durch Kniehebelverbindungen zusammensetzbar sind.

10. Einrichtung nach Anspruch 7, dadurch gekennzeichnet, daß die Gegenform (10) an einer der Formteile (2) über eine Gelenkverbindung (4) angelenkt ist und über Kniehebelverbindungen mit dem anderen Formteil (3) zur Schließung der Gesamtform verbindbar ist.

11. Einrichtung nach Anspruch 7, dadurch gekennzeichnet, daß die Formteile Heizeinrichtungen aufweisen.

12. Isolierendes, winkelförmiges, vorgefertigtes Wandelement, bestehend aus mit einer winkelförmigen Polyurethanschaumplatte verbundenen winkelförmigen Ziegelriemchen, die beim Herstellen des Wandelements durch eine Sand/Isocyanat-Mischung voneinander getrennt sind, in die der Polyurethanschaum eingedrungen ist.

13. Wandelement nach Anspruch 12, bei dem die Mischung 30 - 80 Volumenteile Sand und ein Volumenteil Isocyanat enthält.

14. Wandelement nach Anspruch 11, bei dem das Element mit einer Papierschicht hinterlegt ist.

## Claims

1. Process for producing an angular wall element consisting of an angular rigid foam panel with one part angular brick fillets which are bonded thereto and separated from one another by a mortar-like composition, characterized in that said fillets are laid adjacent to one another with a clearance in a horizontal mould (2, 3) with an essentially V-shaped cross-section, in that the interspaces between the fillets are filled with a mixture of sand and isocyanate and, between the reverse surfaces of the fillets and the sand/isocyanate mixture and a countermould (10), a polyurethane foam is introduced, a part of the polyurethane foam partly penetrating the sand/isocyanate mixture and the regions of the mixture not penetrated by the polyurethane foam being removed from the interspaces between the fillets after curing of the polyurethane foam.

2. Process according to Claim 1, characterized in that the interspaces between the fillets are filled with a mixture of sand and isocyanate the mixture consisting on 30 - 80 parts by volume of sand and one part by volume of isocyanate.

3. Process according to Claim 1, characterized in that the mould provided with depressions (8, 13) to receive the fillets is coated, outside the regions filled with fillets or with the sand/isocyanate mixture, before the introduction of the polyurethane foam, with a release agent.

4. Process according to Claim 1, characterized in that the countermould (10) is covered, before the introduction of the polyurethane foam, with a paper layer.

5. Process according to Claim 1, characterized in that the moulds and materials used are brought, before processing, to an elevated temperature.

6. Process according to Claim 5, characterized in that the elevated temperature is 20 - 100°C.

7. Device for producing an angular wall element consisting of an angular rigid foam panel with one-part angular brick fillets which are bonded thereto and separated from one another by a mortar-like composition, in particular for carrying out a process according to Claim 1, characterized in that two mould parts (2, 3) which can be assembled at right angles with recesses (8, 13) to receive angular fillets in order to form a trough-shaped mould, and in that a countermould (10) can be placed onto the two mould parts (2, 3) with the formation of a clearance.

8. Device according to Claim 7, characterized in that the mould consisting of cast aluminium has an interior polyamide coating.

9. Device according to Claim 7, characterized in that the mould parts (2, 3) arranged at right angles can be assembled by means of toggle-lever connections.

10. Device according to Claim 7, characterized in that the countermould (10) is articulated on one of the mould parts (2) via hinge connections (4) and can be connected to the other mould part (3) via toggle-lever connections closing the entire mould.

11. Device according to Claim 7, characterized in that the mould parts have heating devices.

12. Insulating, angular, prefabricated wall element consisting of angular brick fillets bonded to an angular polyurethane foam panel the fillets being separated from one another on production of the wall element by a sand/isocyanate mixture, which has been penetrated by the polyurethane foam.

13. Wall element according to Claim 12, in which the mixture contains 30 - 80 parts by volume of sand and one part by volume of isocyanate.

14. Wall element according to Claim 11, in which the element is backed with a paper layer.

## Revendications

1. Procédé pour la fabrication d'un élément de paroi angulaire formé d'une plaque angulaire en mousse dure et de réglets angulaires reliés à celle-ci, réalisés d'une seule pièce et séparés les uns des autres par une masse du type mortier, caractérisé en ce qu'on place les réglets, juxtaposés et espacés les uns des autres, dans un moule horizontal (2, 3) à section sensiblement en V, en ce qu'on remplit les intervalles entre les réglets avec un mélange de sable et d'isocyanate, en ce qu'on introduit dans l'espace entre les surfaces arrière des réglets et du mélange sable/isocyanate et un contre-moule (10) de la mousse de polyuréthanne, une partie de cette mousse pénétrant partiellement dans le mélange sable/isocyanate, et en ce que, après le durcissement de la mousse de polyuréthanne, on enlève les zones de mélange non pénétrées par la mousse des intervalles entre les réglets.

2. Procédé selon la revendication 1, caractérisé en ce qu'on remplit les intervalles entre les réglets avec un mélange de 30 à 80 parts en volume de sable et d'une part en volume d'isocyanate.

3. Procédé selon la revendication 1, caractérisé en ce que, avant l'introduction de la mousse de polyuréthanne, on enduit le moule pourvu de creux (8, 13) destinés à recevoir les réglets d'un agent de démoulage, en dehors des intervalles remplis de réglets et du mélange sable/isocyanate.

4. Procédé selon la revendication 1, caractérisé en ce que, avant l'introduction de la mousse de polyuréthanne, on couvre le contre-moule (10) d'une couche de papier.

5. Procédé selon la revendication 1, caractérisé en ce que, avant la transformation, on porte le moule et les matériaux utilisés à une température élevée.

6. Procédé selon la revendication 5, caractérisé en ce que la température élevée est de 20 à 100°C.

7. Dispositif pour la fabrication d'un élément de paroi angulaire formé d'une plaque angulaire en mousse dure et de réglets angulaires reliés à celle-ci, réalisés d'une seule pièce et séparés les uns des autres par une masse du type mortier, en particulier pour la mise en oeuvre d'un procédé selon la revendication 1, caractérisé en ce qu'il est prévu deux parties de moule (2, 3) pourvues de creux (8, 13) destinés à recevoir des réglets angulaires, et aptes à être réunies à angle droit pour définir un moule en forme de cuve, et en ce qu'un contre-moule (10) peut être posé sur les deux parties de moule (2, 3) en formant un espacement.

8. Dispositif selon la revendication 7, caractérisé en ce que le moule formé de fonte d'aluminium comporte un revêtement intérieur en polyamide.

9. Dispositif selon la revendication 7, caractérisé en ce que les parties de moule (2, 3) disposées à angle droit sont aptes à être réunies grâce à des liaisons à genouillère.

10. Dispositif selon la revendication 7, caractérisé en ce que le contre-moule (10) est articulé à l'une des parties de moule (2) par l'intermédiaire d'une liaison articulée (4) et est apte à être relié à l'autre partie de moule (3) par l'intermédiaire de liaisons à genouillère en vue de fermer l'ensemble du moule.

11. Dispositif selon la revendication 7, caractérisé en ce que les parties de moule comportent des dispositifs de chauffage.

12. Elément de paroi préfabriqué angulaire isolant formé de réglets angulaires reliés à une plaque angulaire en mousse de polyuréthanne et séparés les uns des autres, lors de la fabrication de l'élément de paroi, par un mélange sable/isocyanate dans lequel la mousse de polyuréthanne a pénétré.

13. Elément de paroi selon la revendication 12, dans lequel le mélange contient 30 à 80 parts en volume de sable et une part en volume d'isocyanate.

14. Elément de paroi selon la revendication 11, qui est doublé d'une couche de papier.
